(19) Europäisches Patentamt / European Patent Office / Office européen des brevets

(11) **EP 1 018 234 B1**

(12) **EUROPEAN PATENT SPECIFICATION**

(45) Date of publication and mention
of the grant of the patent:
**06.01.2016 Bulletin 2016/01**

(21) Application number: **98941895.9**

(22) Date of filing: **31.08.1998**

(51) Int Cl.:
***H04L 27/26*** (2006.01)

(86) International application number:
**PCT/KR1998/000269**

(87) International publication number:
**WO 1999/012305 (11.03.1999 Gazette 1999/10)**

(54) **FAST FOURIER TRANSFORM WINDOW POSITION RECOVERY APPARATUS FOR AN ORTHOGONAL FREQUENCY DIVISION MULTIPLEXING RECEIVER**

EINRICHTUNG ZUR RÜCKGEWINNUNG DER FENSTERPOSITION EINER SCHNELLEN FOURIERTRANSFORMATION FÜR EINEN ORTHOGONALEN FREQUENZMULTIPLEX-EMPFÄNGER

DISPOSITIF DE RECUPERATION DE POSITION DE FENETRE A TRANSFORMEE DE FOURIER RAPIDE POUR UN RECEPTEUR DE MULTIPLEXAGE PAR REPARTITION EN FREQUENCE A MODE ORTHOGONAL

(84) Designated Contracting States:
**ES FR GB**

(30) Priority: **30.08.1997   KR 9744415**

(43) Date of publication of application:
**12.07.2000 Bulletin 2000/28**

(73) Proprietor: **Samsung Electronics Co., Ltd.**
**Suwon-si, Gyeonggi-do, 443-742 (KR)**

(72) Inventors:
• **PARK, So, Ra**
**Anyang-city**
**Kyungki-do 431-061 (KR)**
• **KIM, Dong, Kyu**
**Sooyoung-gu**
**Pusan-city 613-101 (KR)**
• **CHOI, Hyung, Jin**
**Songpa-gu**
**Seoul 138-220 (KR)**

(74) Representative: **Appleyard Lees**
**15 Clare Road**
**Halifax HX1 2HY (GB)**

(56) References cited:
**EP-A1- 0 786 889      EP-A2- 0 730 357**
**WO-A1-94/26046**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to an orthogonal frequency division multiplexing (OFDM) system, and particularly to a fast Fourier transform (FFT) window position recovery apparatus in an OFDM receiver.

Background Art

In general, time synchronization must be accurately performed to allow a receiver to recover a European digital broadcast OFDM signal transmitted from a transmitter. Time synchronization is comprised of FFT window position recovery for accurate parallel processing of a signal, and sampling clock recovery for controlling a sampling clock of an analog-to-digital converter (ADC) for sampling a signal having a maximum signal-to-noise ratio (SNR) among received signals.

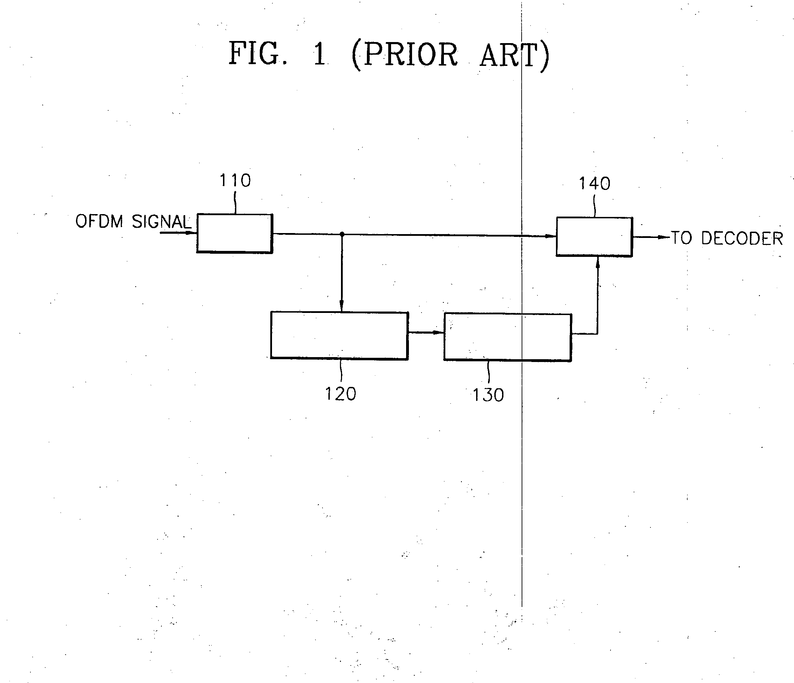

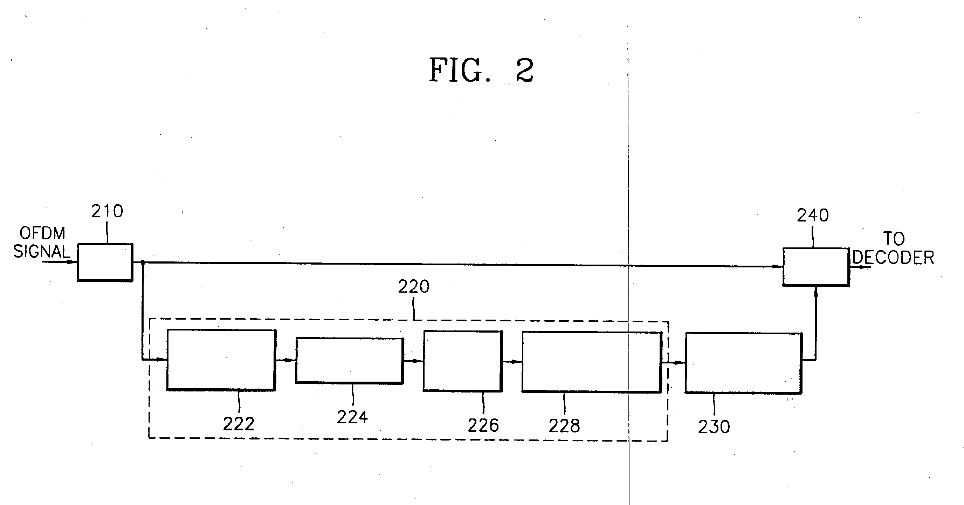

FIG. 1 is a block diagram showing the configuration of a general OFDM system receiver, and FIG. 2 is a block diagram of the symbol start detector 120 of FIG. 1. First, when the number of bins of FFT is N, a symbol of an OFDM signal comprises N effective data samples output by inverse fast Fourier transform (IFFT) for transmission and a guard interval having the length of G samples interposed between symbols to prevent interference between the symbols. That is, a transmitter (not shown) copies the end portion of an effective section. Then, the transmitter adds the copied result to N complex values output by an inverse fast Fourier transformer (IFFT: not shown), and sequentially transmits a symbol comprised of a total of (G+N) samples.

$$s_j = \sum_{n=-G}^{N-1} x_{j,n} = \sum_{n=-G}^{-1} \sum_{k=0}^{N-1} X_{j,k}\, e^{j2\pi (N+n)/N} + \sum_{n=0}^{N-1} \sum_{k=0}^{N-1} X_{j,k} e^{j2\pi\, kn/N} \quad \ldots (1)$$

wherein j denotes a symbol number, k is a carrier index (number), N is the number of effective data samples, n indicates a sampling time, and X(•) and x(•) respectively denote an input complex value and an output complex value of the transmission IFFT. Equation 1 shows a j-th symbol comprised of complex values output by a fast Fourier transformer (FFT) 140. In the right side of Equation 1, the first term is a guard interval portion and the second term is an effective data portion.

As shown in FIG. 1, an analog-to-digital converter (ADC) 110 samples a received OFDM signal and converts the sampled OFDM signal into digital data. A symbol start detector 120 detects a start portion of a symbol from the sampled OFDM data output by the ADC 110. A FFT window controller 130 designates a point in time to activate a FFT 140 using the symbol start portion detected by the symbol start detector 120. Here, a value output from the first end of an IFFT (not shown) of a transmitter must be input to the first end of the FFT 140 of a receiver, and a value output by the N-th end of the IFFT must be input to the N-th end of the FFT 140. However, an accurate symbol starting portion may not be estimated by a fading phenomenon or an environmental effect upon movement of the receiver, so that the symbol start detector 120 misjudges the symbol starting portion. In the prior art, this symbol start portion is detected either by finding a maximum position of a correlation value between received signals or by finding a minimum position of an absolute value of the difference between the received signals. However, these two ways require a correlation value therebetween, resulting in complicated system realization. Alternatively, the symbol starting position can be detected by using 2-bit quantization of an input signal. This way provides a simple structure because of the 2-bit quantization. However, when a frequency offset defined as a carrier frequency synchronization fault exists, phase rotation of the input signal occurs to thus change the phases of an effective section end portion and a guard interval. Thus, a position having a maximum correlation value cannot be found, and symbol starting position recovery is difficult.

European Patent application EP730357 discloses a method and device for synchronization of OFDM signals. A frequency error signal is utilised in a control loop for feedback to an oscillator which generates a complex rotating vector which is multiplied by an input signal to compensate for the frequency error.

Disclosure of the Invention

It is an object of the present invention to provide a FFT window position recovery apparatus for quantizing a phase difference between received adjacent complex sample values and recovering a phase fault of a fast Fourier transform (FFT) window using a position having a maximum correlation value with respect to the quantized values in an orthogonal frequency division multiplexer (OFDM) system.

According to the present invention there is provided an apparatus as set forth in the appended claims. Preferred features of the invention will be apparent from the dependent claims, and the description which follows.

Brief Description of the Drawings

FIG. 1 is a block diagram showing the configuration of a general orthogonal frequency division multiplexing (OFDM) system receiver;

FIG. 2 is a block diagram of a fast Fourier transform (FFT) window position recovery apparatus in an OFDM system receiver according to the present invention;

FIG. 3 is a block diagram of the phase difference detector of FIG. 2;

FIG. 4 is a constellation diagram of the phase of an input signal quantized to 3 bits;

FIG. 5 is a block diagram of the correlator of FIG. 2; and

FIG. 6 is a concept view for FFT window position search.

Best mode for carrying out the Invention

Referring to FIG. 2, a FFT window position recovery apparatus in an OFDM system receiver according to the present invention is comprised of an analog-to-digital converter (ADC) 210, a starting position detector 220, a FFT window position controller 230, and a fast Fourier transformer (FFT) 240. Here, the starting position detector 220 includes a phase difference detector 222, a correlator 224, a slide window adder 226, and a maximum value position detector 228.

As shown in FIG. 2, an input OFDM signal is sampled and converted into digital data as expressed in Equation 2 by the ADC 210:

$$\gamma(k) = \gamma(t), \quad t = kT \qquad \qquad ...(2)$$

wherein $\gamma(k)$ is a sampled complex signal, $\gamma(t)$ is a received OFDM signal, k is 0, 1, 2, ..., and T is a rated sampling cycle.

The symbol start detector 220 quantizes a phase difference between digital complex samples output by the ADC 210, and detects a position having a maximum correlation value with respect to the quantized values, as a symbol starting portion.

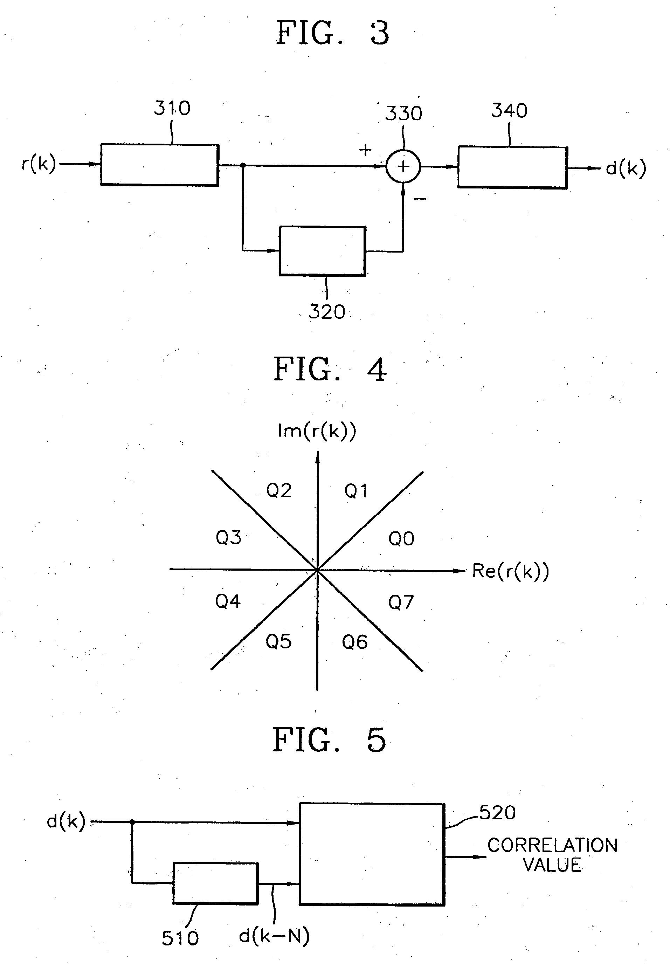

That is, the phase difference detector 222 receives a complex signal $\gamma(k)$ output by the ADC 210 and detects a phase difference between adjacent samples (i.e., between k-th sample and (k-1) th sample). FIG. 3 is a block diagram of the phase difference detector of FIG. 2, including a quantizer 310, a delay 320, a phase difference operator 330, and an adjuster 340. As shown in FIG. 3, the quantizer 310 converts the phase of the complex signal $\gamma(k)$ into 3-bit quantized data C(k). Here, 2-bit quantization is not properly performed under poor noise environments, and quantization of more than 3 bits increases the capacity for storing data and the amount of operation calculation. Thus, 3 bits are selected for optimal quantization. As shown in FIG. 4, the phase of the received complex signal $\gamma(k)$ is divided into eight regions as different values by the quantizer 310. These values can be expressed in 3 bits. For example, the phases of i-th, (i+1)th, and (i+2)th signals are quantized to Q1, Q2 and Q3, respectively. These quantized values Q0, Q1, Q2, Q3, Q4,... are expressed, respectively, as 0, 1, 2, 3, 4,..., as shown in Equation 3:

$$\{Q0, Q1, Q2, Q3, Q4, Q5, Q6, Q7\} = \{0, 1, 2, 3, 4, 5, 6, 7\} \qquad ...(3)$$

The quantizer 310 outputs a representative value of a region to which the phase position of an input complex signal pertains, as shown in Equation 4:

$$c(k) = Q[\gamma(k)], \quad k = 1, \ldots \ldots \ldots 2N+G \qquad ...(4)$$

wherein $Q[\gamma(k)]$ is a function for outputting a quantized sample value c(k) with respect to the sampled input complex

signal $\gamma$(k). Here, when a frequency offset exists, the phase of a complex signal in the guard interval is no longer consistent with that in the rear effective section, which makes it impossible to use the quantized value output by the quantizer 310 without change. Accordingly, in order to reduce the influence of the frequency offset, a phase difference between adjacent samples c(k) and c(k-1) is obtained by applying a differential encoding process. The sample value c(k) output by the quantizer 310, and the one-sample-delayed sample value c(k-1) by the delay 320 are operated by the phase difference operator 330 to output phase difference data d(k) as expressed by Equation 5. Also, the phase difference data d(k) has 15 values by the operations on 3-bit quantized values as expressed by the following Equation 5:

$$d(k) = c(k) - c(k-1) \qquad \qquad ...(5)$$

The phase difference data d(k) value is adjusted to a phase change value to only the same direction by the adjuster 340. The following Equation 6 is for adjusting the phase difference data value to a value of a phase change to only the same direction for convenience of calculation of the correlation value:

$$d(k) < 0 : d(k) = d(k) + 8$$
$$d(k) \geq 0 : d(k) = d(k) \qquad \qquad ...(6)$$

For example, when c(k) is 0, c(k+1) is 4, c(k+2) is 1, and c(k+3) is 6, d(k+1) is 4, d(k+2) is -3, and d(k+3) is -5. Here, (-) code denotes a clockwise change in phase, and (+) code denotes a counterclockwise change in phase, so Equation 6 expresses a phase change to only the same direction.

Next, in order to obtain the correlation value between the guard interval (G) and the rear effective section, the correlator 224 calculates the correlation value between the phase difference data d(k) and N-delayed phase difference data output by the adjuster 340.

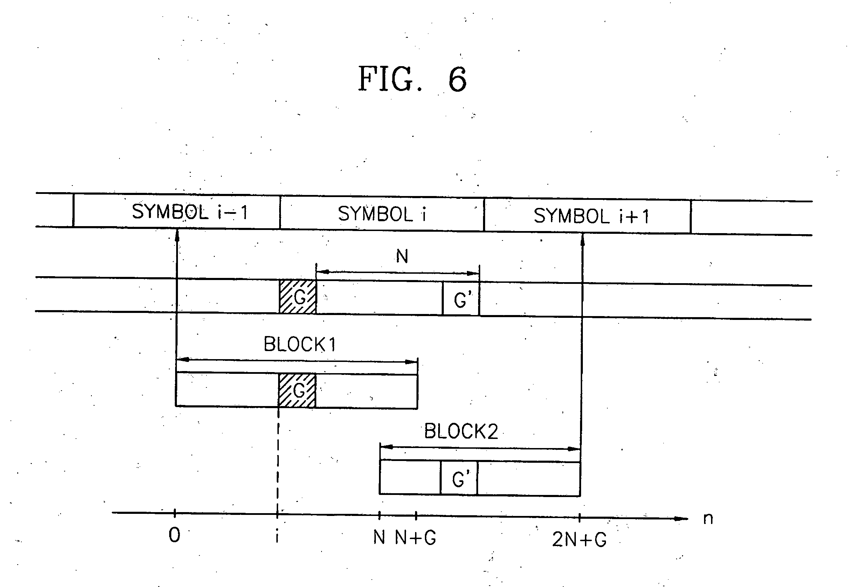

FIG. 5 is a block diagram of the correlator 224 of FIG. 2. A correlation operator 520 obtains the correlation between the phase difference data d(k) and the N-sample-delayed phase difference data d(k-N) by the delay 510. That is, as shown in FIG. 6, a first block BLOCK1 is a value stored from an arbitrary position (0) to a symbol length (N+G), and a second block BLOCK2 is a value stored from the start point in time N to a symbol length (2N+G). A guard interval (G) in the first block BLOCK1 is N-sample delayed from the storing position by the delay 510, thus being in the same location as a rear effective data section (G') in the second block BLOCK2 having the same data as the guard interval (G). In the correlation between the first and second blocks BLOCK1 and BLOCK2, the sections G and G' are the most closely correlated with each other because they have the same data. The residual sections are hardly correlated with each other because they have arbitrary data. A look-up table of a correlation value with respect to a 3-bit quantized value is used to simplify the structure of the correlator 224. That is, in a look-up table (Table 1), a weighted value varies according to the values between the phase difference data d(k) and d(k-N) being input values. That is, when a k-th signal is Q0 and a (k-N)th signal is also Q0, an arbitrary correlation value of 2 is given. When the k-th signal is Q0 and the (k-N)th signal is Q4, a least correlated value of -2 is given.

The slide window adder 226 adds the correlation values output by the correlator 224 within the guard interval (G). The slide window adder 226 performs addition while moving a window from the start point in time 0 to a point in time N in units of one sample. As shown in FIG. 6, the output value of the slide window adder 226 is maximum at a symbol start point in time (i). The maximum value position detector 228 considers this arbitrary point in time as a maximum value and detects this point in time as the symbol starting point. Accordingly, the maximum value position detector 228 detects the maximum value from the summed correlation value and sets the detected maximum value to be a FFT window moving value.

The FFT window position controller 230 designates the position where fast Fourier transform (FFT) is activated by the FFT 240, including a symbol starting position, using position information of the maximum value detected by the maximum value position detector 228. The FFT 240 fast-Fourier- transforms data generated by the ADC 210 according to a FFT window position control signal generated by the FFT window position controller 230.

<Table 1>

| | | d(k) | | | | | | | |
|---|---|---|---|---|---|---|---|---|---|
| | | Q0 | Q1 | Q2 | Q3 | Q4 | Q5 | Q6 | Q7 |
| d (k-N) | Q0 | 2 | 1 | 0 | -1 | -2 | -1 | 0 | 1 |

(continued)

|  |  | d(k) | | | | | | | |
|---|---|---|---|---|---|---|---|---|---|
|  |  | Q0 | Q1 | Q2 | Q3 | Q4 | Q5 | Q6 | Q7 |
|  | Q1 | 1 | 2 | 1 | 0 | -1 | -2 | -1 | 0 |
|  | Q2 | 0 | 1 | 2 | 1 | 0 | -1 | -2 | -1 |
|  | Q3 | -1 | 0 | 1 | 2 | 1 | 0 | -1 | -2 |
|  | Q4 | -2 | -1 | 0 | 1 | 2 | 1 | 0 | -1 |
|  | Q5 | -1 | -2 | -1 | 0 | 1 | 2 | 1 | 0 |
|  | Q6 | 0 | -1 | -2 | -1 | 0 | 1 | 2 | 1 |
|  | Q7 | 1 | 0 | -1 | -2 | -1 | 0 | 1 | 2 |

Industrial Applicability

According to the present invention as described above, the influence of a frequency offset is reduced by using the phase difference between adjacent samples, thus improving the reliability of a system. Also, bit operation can be performed by using 3-bit quantization, thus simplifying the system.

A Fourier transform window position recovery apparatus according to the present invention is applied in an orthogonal frequency division multiplexing system.

**Claims**

1. An orthogonal frequency division multiplexing, OFDM, receiver comprising a fast Fourier transform window position recovery apparatus which receives OFDM symbols, each symbol comprises N effective data samples and a guard interval of G samples and recovers a FFT window position, the apparatus comprising:

   an analog-to-digital converter,ADC(210), for converting a received OFDM signal into digital complex samples; and **characterised by** further comprising
   a symbol start detector (220) for detecting a symbol starting position wherein the symbol start detector (220) comprises:
   a phase difference detector (222) for quantizing the phases of the digital complex samples output by the ADC and detecting the phase difference between successive, quantized adjacent samples;
   a correlator (224) for calculating correlation values, wherein each correlation value is the correlation between the phase difference output by the phase difference detector and a phase difference delayed by N samples;
   a slide window adder (226) for adding the correlation values output by the correlator (224) while moving a window from an arbitrary start point in time O to a point in time N in units of one sample; and a maximum value position detector (228) for detecting a maximum value from the output value of the slide window adder (226) as the symbol starting point; and
   a FFT window controller (230) for activating FFT using the symbol starting point detected by the symbol start detector.

2. The receiver as claimed in claim 1, wherein the correlator comprises a look-up table (520) for providing different weighted values in proportion to the difference between two sample values.

3. The receiver as claimed in claim 1, wherein the phase difference detector comprises:

   a 3-bit quantizer (310) for quantizing the phases of the digital complex samples output by the ADC;
   a phase difference operator (330) for operating a phase difference between successive adjacent samples from the samples output by the quantizer; and
   an adjuster (340) for adjusting the phase difference, d(k), output by the phase difference detector as follows:

$$\mathrm{d(k)<0:d(k) \ = \ d(k)+8}$$

$$d(k) \geq 0 : d(k) = d(k),$$

where k is an index such that k = 1, ... 2N+G

4. The receiver as claimed in claim 3, wherein the phase difference detector (222) comprises:

a delay (320) for outputting c(k-1) by delaying by one sample a quantized value c(k) output by the quantizer; wherein
the phase difference operator (330) is operable to add the c(k) to the one-sample delayed quantized value, c(k-1).

**Patentansprüche**

1. Ein orthogonaler Frequenzmultiplex (OFDM)-Empfänger, umfassend eine Einrichtung zur Rückgewinnung der Fensterposition einer schnellen Fouriertransformation, die OFDM-Symbole empfängt, wobei jedes Symbol N effektive Datenabtastwerte und ein Schutzintervall von G Abtastwerten umfasst und eine FFT-Fensterposition zurückgewinnt, wobei die Einrichtung umfasst:

einen Analog-Digitalwandler ADC (210) zum Umwandeln eines empfangenen OFDM-Signals in digitale komplexe Abtastwerte; und **dadurch gekennzeichnet, dass** dieser weiterhin Folgendes umfasst:

einen Symbolstartdetektor (220) zum Erkennen einer Symbol-Startposition, wobei der Symbolstartdetektor (220) umfasst:

einen Phasendifferenzdetektor (222) zum Quantisieren der Phasen der durch den ADC ausgegebenen digitalen komplexen Abtastwerte und Erkennen der Phasendifferenz zwischen aufeinanderfolgenden quantisierten benachbarten Abtastwerten;
einen Korrelator (224) zum Berechnen von Korrelationswerten, wobei jeder Korrelationswert die Korrelation zwischen der durch den Phasendifferenzdetektor ausgegebenen Phasendifferenz und einer durch N Abtastwerte verzögerten Phasendifferenz ist;
einen Gleitfensteraddierer (226) zum Addieren der durch den Korrelator (224) ausgegebenen Korrelationswerte bei Verlagern eines Fensters von einem willkürlichen Startpunkt zur Zeit 0 zu einem Zeitpunkt N in Einheiten eines Abtastwerts; und
einen Maximalwert-Positionsdetektor (228) zum Erkennen eines Maximalwertes aus dem Ausgangswert des Gleitfensteraddierers (226) als der Symbolstartpunkt; und

eine FFT-Fenstersteuerung (230) zum Aktivieren von FFT unter Verwendung des durch den Symbolstartdetektor erkannten Symbolstartpunkts.

2. Empfänger nach Anspruch 1, wobei der Korrelator eine Nachschlagetabelle (520) zum Bereitstellen verschiedener gewichteter Werte im Verhältnis zu der Differenz zwischen zwei Abtastwerten umfasst.

3. Empfänger nach Anspruch 1, wobei der Phasendifferenzdetektor umfasst:

einen 3-Bit-Quantisierer (310) zum Quantisieren der Phasen der durch den ADC ausgegebenen digitalen komplexen Abtastwerte;
einen Phasendifferenzoperator (330) zum Operieren einer Phasendifferenz zwischen aufeinanderfolgenden benachbarten Abtastwerten aus den durch den Quantisierer ausgegebenen Abtastwerten; und
einen Einsteller (340) zum Einstellen der durch den Phasendifferenzdetektor ausgegebenen Phasendifferenz, d(k), wie folgt:

$$d(k) < 0 : d(k) = d(k) + 8$$

$$d(k) \geq 0 : d(k) = d(k),$$

wobei k ein Index ist, so dass k = 1, ... 2N+G.

**4.** Empfänger nach Anspruch 3, wobei der Phasendifferenzdetektor (222) umfasst:

eine Verzögerung (320) zum Ausgeben von c(k-1) durch Verzögerung durch einen Abtastwert eines durch den Quantisierer ausgegebenen quantisierten Wertes c(k); wobei
der Phasendifferenzoperator (330) betreibbar ist, um das c(k) dem um einen Abtastwert verzögerten quantisierten Wert, c(k-1), hinzuzufügen.

## Revendications

**1.** Récepteur à multiplexage par répartition orthogonale de fréquence, OFDM (Orthogonal Frequency Division Multiplexing), comprenant un appareil de récupération de la position d'une fenêtre de transformée de Fourier rapide qui reçoit des symboles OFDM, chaque symbole comprenant N échantillons de données effectifs et un intervalle de garde de G échantillons et qui récupère une position de fenêtre FFT, l'appareil comprenant :

un convertisseur analogique-numérique, ADC (210), destiné à convertir un signal OFDM reçu en des échantillons numériques complexes ; et **caractérisé en ce qu'**il comprend en outre :

un détecteur de début de symbole (220) destiné à détecter une position de début de symbole, dans lequel le détecteur de début de symbole (220) comprend :

un détecteur de différence de phase (222) destiné à quantifier les phases des échantillons numériques complexes fournis en sortie par le convertisseur ADC et détecter la différence de phase entre des échantillons adjacents quantifiés successifs ;
un corrélateur (224) destiné à calculer des valeurs de corrélation, dans lequel chaque valeur de corrélation est la corrélation entre la différence de phase fournie en sortie par le détecteur de différence de phase et une différence de phase retardée de N échantillons ;
un additionneur de fenêtre glissante (226) destiné à additionner les valeurs de corrélation fournies en sortie par le corrélateur (224) tout en déplaçant une fenêtre d'un point de départ arbitraire au temps zéro à un point correspondant au temps N en unités constituées d'un échantillon ; et
un détecteur de position de valeur maximum (228) destiné à détecter une valeur maximum parmi les valeurs de sortie de l'additionneur à fenêtre glissante (226) en tant que point de début de symbole ; et

une unité de commande de fenêtre FFT (230) destinée à activer une FFT en utilisant les points de début de symbole détectés par le détecteur de début de symbole.

**2.** Récepteur selon la revendication 1, dans lequel le corrélateur comprend une table de consultation (520) destinée à fournir des valeurs pondérées différentes en proportion de la différence entre deux valeurs d'échantillons.

**3.** Récepteur selon la revendication 1, dans lequel le détecteur de différence de phase comprend :

un quantificateur à 3 bits (310) destiné à quantifier les phases des échantillons numériques complexes fournis en sortie par le convertisseur ADC ;
un opérateur de différence de phase (330) destiné à calculer une différence de phase entre des échantillons adjacents successifs parmi les échantillons fournis en sortie par le quantificateur ; et
un dispositif d'ajustement (340) destiné à ajuster la différence de phase, d(k), fournie en sortie par le détecteur de différence de phase, comme indiqué ci-après :

$$d(k) < 0 : d(k) = d(k) + 8$$

$$d(k) \geq 0 : d(k) = d(k),$$

où k est un indice tel que k=1, ..., 2N+G.

**4.** Récepteur selon la revendication 3, dans lequel le détecteur de différence de phase (222) comprend :

un retard (320) destiné à fournir en sortie c(k-1) en retardant d'un échantillon une valeur quantifiée c(k) fournie en sortie par le quantificateur ; dans lequel l'opérateur de différence de phase (330) a pour fonction d'additionner la valeur c(k) à la valeur c(k-1) quantifiée retardée d'un échantillon.

# FIG. 1 (PRIOR ART)

OFDM SIGNAL → 110 → · → 140 → TO DECODER

110 → 120 → 130 → 140

EP 1 018 234 B1

# FIG. 2

# FIG. 3

r(k) → [ 310 ] → • ——————→ (+/−) 330 → [ 340 ] → d(k)

320

# FIG. 4

Im(r(k))

Q2    Q1

Q3         Q0

——————————————— Re(r(k))

Q4         Q7

Q5    Q6

# FIG. 5

d(k) → • ——————————→ [ 520 ] → CORRELATION VALUE

[ 510 ]

d(k−N)

# FIG. 6

EP 1 018 234 B1

**EP 1 018 234 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 730357 A